# EUROPÄISCHE PATENTSCHRIFT

(11) **EP 1 476 522 B1**
(45) Veröffentlichungstag und Bekanntmachung des Hinweises auf die Patenterteilung: **16.08.2006**
(21) Anmeldenummer: 03714733.7
(22) Anmeldetag: 06.02.2003
(51) Int. Cl.: C09J 201/10, C09D 201/10, C09J 175/04, C08G 18/12

(54) **REAKTIVES EINKOMPONENTEN-BESCHICHTUNGS- UND/ODER KLEBSTOFFGRANULAT**
REACTIVE SINGLE-COMPONENT COATING AND/OR ADHESIVE GRANULATE
GRANULAT MONOCOMPOSANT REACTIF POUR LE COLLAGE ET/OU L'ENDUCTION

(30) Priorität: 19.02.2002 DE 10206992; 13.03.2002 DE 10210956
(43) Veröffentlichungstag der Anmeldung: 17.11.2004
(73) Patentinhaber: Jowat AG, 32758 Detmold (DE)
(72) Erfinder: HIPPOLD, Theodor, 32108 Bad Salzuflen (DE); STARCK, Felix, 32760 Detmold (DE); TERFLOTH, Christian, 32760 Detmold (DE)
(74) Vertreter: Gesthuysen, von Rohr & Eggert
(86) Internationale Anmeldenummer: PCT/EP2003/001184
(87) Internationale Veröffentlichungsnummer: WO 2003/070851

(56) Entgegenhaltungen:
- EP-A- 0 600 767
- WO-A-00/47687
- WO-A-02/090454
- US-A- 3 627 714
- US-A- 5 100 995
- US-A- 5 356 945
- DATABASE WPI Week 9431 Derwent Publications Ltd., London, GB; AN 1994-249680 XP002247391 & CA 2 084 359 A (AT PLASTICS), 3. Juni 1994 (1994-06-03)

## Beschreibung

Die vorliegende Erfindung betrifft reaktive Einkomponenten-Beschichtungs- und/oder Klebstoffgranulate, Verfahren zu ihrer Herstellung sowie ihre Verwendung.

Beschichtungs- und Schmelzklebstoffe sind in einer großen Anzahl bekannt. Beispielsweise werden isocyanathaltige Polyurethanbeschichtungs- und -klebstoffe verwendet.

Bei diesen Polyurethan-Beschichtungs- und Klebstoffen handelt es sich beispielsweise um feuchtigkeitshärtende bzw. feuchtigkeitsvemetzende isocyanathaltige Polyurethane, die bei Raumtemperatur fest sind und in Form ihrer Schmelze als Klebstoff appliziert werden. Die polymeren Bestandteile dieser Klebstoffe sind Polyurethangruppen sowie reaktionsfähige Isocyanatgruppen. Durch Abkühlen einer aufgetragenen Schmelze erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Material an. Für viele Anwendungen sind diese isocyananthaltigen Polyurethanklebstoffe lösemittelfrei und viskos. Zu weiteren Einzelheiten bezüglich isocyanathaltiger Polyurethanpolymere kann auf H. F. Müller, H. Müller, *"Shaping Reactive Hotmelts Using LMW Copolyesters",* Adhesive Age, November 1987, Seiten 32 bis 35 verwiesen werden.

Alternativ können reaktive Beschichtungs- und Klebstoffe auch auf Basis von silanfunktionellen Polymeren hergestellt werden.

Zusammensetzungen auf Basis von isocyanathaltigen oder silanfunktionellen Polymeren für derartige Beschichtungs- und Klebstoffmaterialien sind aus der Patentanmeldung WO 00/47687 A1 bekannt, die ein Verfahren zur kontinuierlichen Herstellung eines Mehrkomponenten-Beschichtungs- und Klebstoffinaterials auf Basis von isocyanatterminierten oder silanfunktionellen Polymeren sowie deren Verwendung zum Verkleben bzw. Beschichten beschreibt. Diese Materialien werden durch Vermischung der einzelnen Komponenten, insbesondere unter Erwärmung bis in einen flüssigen Zustand, hergestellt und dann unmittelbar ihrer Verwendung zugeführt. Im Fall eines Klebstoffmaterials auf Basis von Isocyanaten bestehen die beiden Komponenten einerseits aus einem höhermolekularem Ausgangspolymer und andererseits aus einem reaktiven isocyanatterminierten Vernetzer. Bei Verwendung eines Kleb- bzw. Beschichtungsmaterials auf Basis von silanfunktionellen Polymeren kommt es zur Umsetzung eines höhermolekularen Ausgangspolymers mit einem reaktiven silanfunktionellen Vernetzer.

Die Verwendung von Mehrkomponentensystemen bei der Herstellung von Schmelzkleb- und Beschichtungsmaterialien ist bekannt. Hierzu kann beispielsweise auf *"Handbook of adhesives",* 2. Ausgabe, S. 581 ff. und auf *"The ICI polyurethanes book",* 2. Ausgabe, S. 93 ff. verwiesen werden. Bei diesen Mehrkomponentensystemen kommt es ausschließlich zu einer Reaktion der Komponenten untereinander und nach erfolgter Reaktion liegt keinerlei Reaktivität für Folgereaktionen beispielsweise mit Feuchtigkeit mehr vor.

Allerdings kann für bestimmte Anwendungen die Verwendung von Beschichtungs- und Klebstoffsystemen gewünscht sein, die als Einkomponentensystem vorliegen; denn diese müssen dann vor ihrer Applikation nicht gemischt werden. Eine Mischung der einzelnen Bestandteile eines Mehrkomponentensystems dagegen ist im allgemeinen aufwendiger und muß in einen Verarbeitungsprozeß integriert werden; dafür sind im allgemeinen aufwendige Zusatzapparaturen, wie beispielsweise Dosiervorrichtungen für die unterschiedlichen Komponenten, notwendig und darüber hinaus besteht insbesondere die Gefahr von Dosierfehlern. Auch ist ein rasches Verarbeiten der bereitgestellten Mehrkomponentensysteme notwendig, damit es nicht schon vor der gewünschten Applikation zu einer Umsetzung der Bestandteile, insbesondere unter dem Einfluß von Feuchtigkeit, kommt.

Vor diesem technischen Hintergrund besteht nunmehr die Aufgabe der vorliegenden Erfindung, ein reaktives Einkomponenten-Granulat, insbesondere Einkomponenten-Beschichtungs- und/oder -Klebstoffgranulat, zur Verfügung zu stellen, das als Einkomponentensystem bereits alle reaktiven Bestandteile und gewünschten Zusatzstoffe umfaßt und ohne Vordosierung verwendet werden kann.

Eine weitere Aufgabe der vorliegenden Erfindung besteht in der Bereitstellung eines reaktiven Einkomponenten-Granulats, insbesondere Einkomponenten-Beschichtungs- und/oder -Klebstoffgranulats, das problemlos gelagert und leicht weiterverarbeitet werden kann und dabei ausgezeichnete Klebe- bzw. -Beschichtungseigenschaften aufweisen soll.

Eine weitere Aufgabe der vorliegenden Erfindung besteht in der Bereitstellung effizienter Verfahren zur Herstellung solcher reaktiven Einkomponenten-Beschichtungs- und/oder -Klebstoffgranulate.

### ERSTE AUSFÜHRUNGSFORM:

### REAKTIVE EINKOMPONENTEN-GRANULATE, INSBESONDERE EINKOMPONENTEN-BESCHICHTUNGS- UND/ODER -KLEBSTOFFGRANULATE, AUF ISOCYANATBASIS

Gegenstand gemäß einer ersten Ausführungsform der vorliegenden Erfindung ist somit ein Verfahren zur Herstellung eines reaktiven Einkomponenten-Granulats, insbesondere eines Einkomponenten-Beschichtungs- und/oder -Klebstoffgranulats, gemäß Anspruch 1. Weitere Ausgestaltungen sind in den Ansprüchen 2 bis 23 und 39 bis 46 und 50 beschrieben.

Bei der ersten Ausfiihrungsform des erfindungsgemäßen Verfahrens erfolgt die Herstellung der Mischung in Schritt (a) vorzugsweise unter Ausschluß von Feuchtigkeit, da das Di- bzw. Polyisocyanat unter dem Einfluß von Feuchtigkeit zur Hydrolyse neigt. Alternativ oder zusätzlich kann das isocyanatreaktive Ausgangspolymer vor bzw. während der Herstellung der Mischung in Schritt (a) durch Evakuieren getrocknet werden. Unter Evakuieren versteht man erfindungsgemäß jedes Anlegen von vermindertem Druck bzw. Vakuum, der bzw. das ausreichend ist, um störende Feuchtigkeit im wesentlichen zu entfernen.

Bei der ersten Ausführungsform des erfindungsgemäßen Verfahrens kann das isocyanatreaktive Ausgangspolymer vorzugsweise zunächst geschmolzen werden und dann in diese Schmelze das Diisocyanat bzw. Polyisocyanat eingetragen werden. Erfindungsgemäß ist aber auch ein Schmelzen des Diisocyanats bzw. Polyisocyanats möglich, in das dann das isocyanatreaktive Ausgangspolymer eingetragen wird.

Das Aufschmelzen-der einzelnen Bestandteile kann bei Temperaturen von 50 °C bis 300 °C, insbesondere 100 °C bis 275 °C, vorzugsweise 150 °C bis 250 °C, erfolgen.

Bei dem isocyanatreaktiven Ausgangspolymer handelt es sich im allgemeinen um ein thermoplastisches Polymer, d. h. um ein Polymer, das unterhalb der Temperaturen, bei der es mit dem Diisocyanat und/oder Polyisocyanat vernetzt, thermoplastisch ist. Unter Thermoplasten werden erfindungsgemäß die Polymere verstanden, die oberhalb der Gebrauchstemperatur einen Fließübergangsbereich besitzen. Bei ihnen ist im erweichten Zustand durch Pressen, Extrudieren, Spritzgießen oder andere Formgebungsverfahren eine Verarbeitung zu Formteilen möglich.

Gemäß der ersten Ausführungsform des erfindungsgemäßen Verfahrens können als Diisocyanate bzw. Polyisocyanate aliphatische und/oder aromatische Di- und/oder Polyisocyanate eingesetzt werden. Diese Diisocyanate bzw. Polyisocyanate können insbesondere freie endständige NCO-Gruppen aufweisen.

Die erfindungsgemäß geeigneten Diisocyanate bzw. Polyisocyanate können ausgewählt werden aus der Gruppe von Düsocyanatodiphenyhnethanen (MDIs), insbesondere 4,4'- Diisocyanatodiphenylmethan und 2,4'-Diisocyanatodiphenylmethan, sowie Mischungen verschiedener Diisocyanatodiphenylmethane; 1,5-Diisocyanatonaphthalin (NDI); Diisocyanatotoluolen (TDIs), insbesondere 2,4-Diisocyanatotoluol, sowie TDI-Urethdionen, insbesondere dimerem 1-Methyl-2,4-phenylen-düsocyanat (TDI-U), und TDI-Harnstoffen; 1-Isocyanato-3-isocyanatomethyl-3,5,5-trimethylcyclohexan (IPDI) und dessen Isomeren und Derivaten, insbesondere Di-, Tri- und Polymerisaten, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); sowie Mischungen und Prepolymeren der zuvor genannten Verbindungen.

Erfindungsgemäß besonders bevorzugte Düsocyanate bzw. Polyisocyanate sind unsymmetrisch substituierte Diisocyanate bzw. Polyisocyanate, die vorzugsweise zwei endständigen NCO-Gruppen unterschiedlicher Reaktivität aufweisen. Daher ist die Verwendung von 2,4'-Diisocyanatodiphenylmethan in der ersten Ausführungsform des erfindungsgemäßen Verfahrens besonders bevorzugt. 2,4'-Diisocyanatodiphenylmethan besitzt zwei unterschiedliche NCO-Gruppen in der 2-Position des ersten Aromaten und in der 4-Position des zweiten Aromaten. Die in 2-Position befindliche NCO-Gruppe ist - im Gegensatz zu der NCO-Gruppe in 4-Position - relativ reaktionsträge und steht somit in dem erfindungsgemäßen Verfahren für einen längeren Zeitraum zur Verfügung. Die unterschiedliche Reaktivität der NCO-Gruppen in 2- und 4-Position ist insbesondere in der unterschiedlichen sterischen Zugänglichkeit begründet.

In der ersten Ausführungsform des erfindungsgemäßen Verfahrens können auch Mischungen unterschiedlicher Diisocyanate bzw. Polyisocyanate verwendet werden. Erfindungsgemäß besonders bevorzugt ist eine Mischung aus 4,4'-Diisocyanatodiphenylmethan und 2,4'-Diisocyanatodiphenylmethan, vorzugsweise mit einem Gehalt an 2,4'-Diisocyanatodiphenylmethan von mehr als 20 Gew.-%, insbesondere mehr als 30 Gew.-%, bevorzugt mehr als 40 Gew.-%, ganz besonders bevorzugt mehr als 50 Gew.-%. Dabei ist die Gewichtsangabe auf das Isocyanatgemisch bezogen. Ein Beispiel für eine erfindungsgemäß geeignete Mischung aus 4,4'- Diisocyanatodiphenylmethan und 2,4'-Diisocyanatodiphenylmethan ist das von der Bayer AG unter der Bezeichnung Desmodur® VP KA 8616 vertriebene, bei Raumtemperatur flüssige Produktgemisch.

Die Verwendung von wie zuvor beschriebenen Mischungen aus 4,4'-Diisocyanatodiphenylinethan und 2,4'-Diisocyanatodiphenylmethan in der ersten Ausführungsform des erfindungsgemäßen Verfahrens führt zu einem Produkt, das bereits bei Raumtemperatur unter Feuchtigkeitseinwirkung vernetzt, wobei der Vernetzungsvorgang durch Wärmeeinwirkung aktiviert bzw. beschleunigt wird und die Wärmeeinwirkung für Adhäsionsvorgänge (Hitzeklebrigkeit) erforderlich ist. Es resultiert ein erfindungsgemäßes Produkt mit geringerer Reaktivität und höherer Selektivität.

Gemäß der ersten Ausführungsform der vorliegenden Erfindung kann als Diisocyanat bzw. Polyisocyanat ein maskiertes oder blockiertes Diisocyanat bzw. Polyisocyanat verwendet werden, welches insbesondere unter Wärme- und/oder Feuchtigkeitseinwirkung die blockierenden oder maskierenden Gruppen abspaltet. Blockierte oder maskierte Diisocyanate bzw. Polyisocyanate dieser Art sind dem Fachmann aus dem Stand der Technik bekannt. Erfindungsgemäß geeignete blockierte oder maskierte Isocyanate wird er je nach Anwendung entsprechend auswählen.

Gemäß der ersten Ausführungsform der vorliegenden Erfindung kann als Diisocyanat bzw. Polyisocyanat ein sogenanntes verkapseltes oder oberflächendesaktiviertes Diisocyanat bzw. Polyisocyanat verwendet werden, d. h. ein Diisocyanat bzw. Polyisocyanat mit retardierter Reaktivität. Verkapselte oder oberflächendesaktivierte Diisocyanat bzw. Polyisocyanate sind dem Fachmann aus dem Stand der Technik geläufig. Beispielsweise kann verwiesen werden auf die EP 0 204 970 A2 bzw. die entsprechende US-A-4 888 124, die WO 99/58590 A1 oder aber auf die EP 0 922 720 A1, deren Offenbarungsgehalt hiermit durch Bezugnahme eingeschlossen sind. Die Oberflächendesaktivierung kann beispielsweise durch Dispersion eines pulverförmigen, festen Isocyanats in einer Lösung des Desaktivierungsmittels, durch Eintragen einer Schmelze eines niederschmelzenden Isocyanats in eine Lösung des Desaktivierungsmittels in einem nichtlösenden flüssigen Dispersionsmittel oder aber durch Zugabe des Desaktivierungsmittels oder einer Lösung des Desaktivierungsmittels zu einer Dispersion der festen feinteiligen Isocyanate oder umgekehrt erfolgen. Als Desaktivierungsmittel werden insbesondere Verbindungen mit hydrophilen Gruppen wie insbesondere Aminogruppen oder Hydroxylgruppen verwendet, die mit freien Isocyanatgruppen des Isocyanats reagieren können und somit eine Art Oberflächenhülle auf den Isocyanaten ausbilden, welche die Isocyanate zunächst desaktiviert (z. B. Amine, Diamine, Polyamine, Alkohole, Diole, Polyole oder die entsprechenden Thioverbindungen). Insbesondere wird im Rahmen der vorliegenden Erfindung das Desaktivierungsmittel in Art und Menge derart ausgewählt, daß die Verkapselung oder Oberflächendesaktivierung vorzugsweise bei Temperaturen oberhalb der Raumtemperatur, insbesondere bei Temperaturen zwischen 60 °C und 160 °C, aufgebrochen wird.

Die Herstellung des Beschichtungs- und/oder -Klebstoffgranulats in Schritt (b) des erfindungsgemäßen Verfahren gemäß der ersten Ausführungsform kann durch Unterwassergranulation oder mit Hilfe eines Austragebandes erfolgen.

Bei Durchführung der Unterwassergranulation wird die Schmelze in extrudierbarer Form nahe dem nach der Ring- und Kugelmethode gemessenen Erweichungspunkt bereitgestellt. Die Schmelze wird dann durch mindestens eine Öffnung einer Formplatte in eine kühlende Flüssigkeit extrudiert. Bei dieser Flüssigkeit handelt es sich vorzugsweise um Wasser. Allerdings kann auch jede andere Flüssigkeit, die geeignet ist, die extrudierte Masse ausreichend zu kühlen, im Rahmen der vorliegenden Erfindung verwendet werden. Bei ihrem Austritt aus der Formplatte kann die extrudierte Masse beispielsweise durch rotierende Messer zerkleinert werden. Weitere Einzelheiten zur Unterwassergranulation finden sich in den Druckschriften EP 0 410 914 A1, EP 0 014 467 A1 und DE-OS 20 34 038, deren gesamter Offenbarungsgehalt hiermit durch Bezugnahme eingeschlossen ist.

Bei der Granulierung mit Hilfe des Austragebandes sollte vorzugsweise unter Feuchtigkeitsausschluß verfahren werden, damit es nicht zu einer Hydrolyse der feuchtigkeitsreaktiven Komponenten kommt.

Gegenstand der vorliegenden Erfindung sind auch die nach der ersten Ausführungsform des erfindungsgemäßen Verfahrens herstellbaren reaktiven Einkomponenten-Granulate, insbesondere Einkomponenten-Beschichtungs- und/oder -Klebstoffgranulate. Diese sind Gegenstand der Ansprüche 44 bis 47.

Die reaktiven Einkomponenten-Beschichtungs und/oder -Klebstoffgranulate gemäß der ersten Ausführungsform umfassen mindestens ein isocyanatreaktives Ausgangspolymer und mindestens ein Düsocyanat bzw. Polyisocyanat. Fakultativ kann das erfindungsgemäße Granulat zusätzlich mindestens einen Katalysator und/oder mindestens ein Wachs und/oder mindestens ein Harz und/oder mindestens ein vorzugsweise nichtisocyanatreaktives Polymer enthalten. Das erfindungsgemäße Granulat kann einen Überschuß an Düsocyanat und/oder Polyisocyanat aufweisen. Dieser beträgt insbesondere 0,5 % bis 30 %, vorzugsweise 0,5 % bis 10 %, bevorzugt 0,5 % bis 5 %, besonders bevorzugt 0,5 % bis 3 %, und wird vorzugsweise durch freie endständige Isocyanatgruppen erzeugt. Bezüglich den Spezifikationen und Ausführungen des isocyanatreaktiven Ausgangspolymer, des Diisocyanats bzw. Polyisocyanats, des nichtisocyanatreaktiven Polymers, des Harzes, des Wachses und des Katalysators wird auf obige Ausführungen zu der ersten Ausführungsform des erfindungsgemäßen Verfahrens verwiesen.

### ZWEITE AUSFÜHRUNGSFORM:

### REAKTIVE EINKOMPONENTEN-GRANULATE, INSBESONDERE EINKOMPONENTEN-BESCHICHTUNGS- UND/ODER -KLEBSTOFFGRANULATE, AUF POLYOLEFINBASIS

Gegenstand gemäß einer zweiten Ausführungsform der vorliegenden Erfindung ist ein Verfahren zur Herstellung eines reaktiven Einkomponenten-Granulats, insbesondere Einkomponenten-Beschichtungs- und/oder -Klebstoffgranulats, gemäß dem Anspruch 24 Weitere Ausgestaltungen sind in den Ansprüchen 25 bis 43 und 47 bis 50 beschrieben.

Bei dem erfindungsgemäßen Verfahren gemäß der zweiten Ausführungsform kann die Bildung der Schmelze in Schritt (a) vorzugsweise durch gleichzeitiges Aufschmelzen aller Komponenten erfolgen.

Das Aufschmelzen der einzelnen Bestandteile kann bei Temperaturen von 50 °C bis 300 °C, insbesondere 100 °C bis 275 °C, vorzugsweise 150 °C bis 250 °C, erfolgen.

Die Herstellung des Beschichtungs- und/oder -Klebstoffgranulats in Schritt (b) des erfindungsgemäßen Verfahren gemäß der zweiten Ausführungsform kann durch Unterwassergranulation oder mit Hilfe eines Austragebandes erfolgen. Bezüglich der Durchführung der Unterwassergranulation wird auf das erfindungsgemäße Verfahren gemäß der ersten Ausführungsform verwiesen. Bei der Granulierung mit Hilfe des Austragebandes sollte vorzugsweise unter Feuchtigkeitsausschluß verfahren werden, damit es nicht zu einer Hydrolyse des silanfunktionellen Polyolefins kommt.

Das in dem erfindungsgemäßen Verfahren gemäß der zweiten Ausführungsform zu verwendende silanfunktionelle Polyolefin kann ein silanfunktionelles Poly-α-olefin sein. Vorzugsweise handelt es sich um ein amorphes Poly-α-olefin. Um eine hohe Reaktivität des silanfunktionellen Polyolefins sicherzustellen, kann es sich darüber hinaus um ein silanterminiertes Polyolefin handeln. Diese silanfunktionellen Polyolefine können durch Pfropfung eines Polyolefins erhalten werden. Vorzugsweise handelt es sich um ein mit Trialkoxysilylgruppen, insbesondere Trimethoxysilylgruppen, modifiziertes Polyolefin. Allerdings können auch anders modifizierte silanfunktionelle Polyolefine im Rahmen der vorliegenden Erfindung gemäß der zweiten Ausführungsform verwendet werden. Als geeignetes Beispiel für ein erfindungsgemäß zu verwendendes silanfunktionelles Polyolefin kann man das von der Degussa Hüls AG unter der Bezeichnung VESTOPLAST® 206 vertriebene silanfunktionelle Poly-α-olefin nennen. Hierbei handelt es sich um ein mit Trimethoxysilylgruppen substituiertes bzw. gepfropftes Poly-α-olefin. Die Wirkung dieser Verbindung beruht darauf, daß die Silanfunktionen des VESTOPLAST® 206 nach dem Auftragen in Schmelzform feste chemische Bindungen zwischen den Polymerketten der Kleberschicht und den OH-Gruppen an der Oberfläche des Substrats ausbilden, auf dem der Klebstoff appliziert wird.

Dies führt nach dem Auftragen der Schmelze zu einer deutlichen Zunahme der Adhäsion zu den Substraten. Darüber hinaus wird durch den reaktiven Charakter von VESTOPLAST® 206 auch die Adhäsion zu Kunststoffen wie Polyestern und Polyamiden sowie Metallen, deren Verklebung oder Beschichtung mit amorphen Poly-α-olefin normalerweise schwierig ist, verbessert.

Gegenstand der vorliegenden Erfindung sind auch die nach der zweiten Ausführungsform des erfindungsgemäßen Verfahrens herstellbaren reaktiven Einkomponenten-Granulate, insbesondere Einkomponenten-Beschichtungs und/oder -Klebstoffgranulate. Diese sind Gegenstand der Ansprüche 48 bis 50.

Die reaktiven Einkomponenten-Beschichtungs und/oder -Klebstoffgranulate gemäß der zweiten Ausführungsform umfassen mindestens ein silanfunktionelles Polyolefin, mindestens ein nichtsilanfunktionelles Polyolefin und mindestens einen Katalysator. Fakultativ können die reaktiven Einkomponenten-Beschichtungs- und/oder -Klebstoffgranulate mindestens einen Wachs und/oder mindestens ein Harz und/oder mindestens einen Zusatzstoff enthalten.

Bezüglich den Spezifikationen des silanfunktionellen Polyolefins, des nichtsilanfunktionellen Polyolefins, des Katalysators, des Wachses, des Harzes und des Zusatzstoffes wird auf obige Ausführungen zu der zweiten Ausführungsform des erfindungsgemäßen Verfahrens verwiesen.

Die erfindungsgemäßen Granulate nach der ersten und der zweiten Ausführungsform liegen insbesondere in Form von Pellets vor, deren Größe 1 mm bis 10 mm, vorzugsweise 2 mm bis 8 mm, betragen kann.

Das erfindungsgemäße Granulat gemäß der ersten und/oder der zweiten Ausführungsform wird vorzugsweise gegen Einflüsse der Umgebungsluft, insbesondere gegen Luftfeuchtigkeit, oder sonstige Einflüsse geschützt. Vorzugsweise wird das Granulat luftfeuchtigkeitsdicht oder -geschützt verpackt, gelagert und/oder gehandhabt. Insbesondere erfolgt dies durch geeignete, handelsübliche Verpakkungen oder dergleichen.

Gegenstand der vorliegenden Erfindung ist auch die Verwendung der erfindungsgemäßen reaktiven Einkomponenten-Beschichtungs- und/oder -Klebstoffgranulate gemäß der ersten und/oder der zweiten Ausführungsform zum Verkleben oder Beschichten. Die erfindungsgemäßen Granulate können somit beispielsweise zum Verkleben von Schaumpolstern, Polstermöbeln und Matratzen verwendet werden. Auch kontinuierliche Beschichtungen, wie sie für Profilummantelungen verwendet werden, können mit den erfindungsgemäßen Granulaten durchgeführt werden. Dabei erfolgt die Aufbringung insbesondere durch Sprüh-, Spritz-, Düsen- oder Walzauftrag.

Die vorliegende Erfindung zeigt eine Reihe von Vorteilen gegenüber dem Stand der Technik:
- Das erfindungsgemäße Verfahren nach der ersten und zweiten Ausführungsform liefert auf einfache und leicht durchführbare Weise ein Einkomponenten-Beschichtungs- und -Klebstoffgranulat. Für die Durchführung des Herstellungsverfahrens sind keine größeren apparativen Vorkehrungen zu treffen; vielmehr kann die Herstellung auf ausschließlich geläufigen und industriell weit verbreiteten Anlagen realisiert werden.
- Das erfindungsgemäße Beschichtungs- und Klebstoffgranulat sowohl nach der ersten als auch nach der zweiten Ausführungsform umfaßt ein Einkomponentensystem. Eine Mischung der reaktiven Bestandteile vor der Applizierung ist daher nicht mehr notwendig. Die Möglichkeit eines Dosierfehlers besteht folglich nicht.
- Darüber hinaus handelt es sich um ein hocheffizientes, lagerstabiles und leicht zu verwendendes Beschichtungs- und Klebstoffgranulat.

Weitere Ausgestaltungen, Abwandlungen, Variationen und Vorteile der vorliegenden Erfmdung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der folgenden Ausführungsbeispiele veranschaulicht, welche die vorliegende Erfindung jedoch keinesfalls beschränken.

### AUSFÜHRUNGSBEISPIELE:

### Beispiel 1: Erfindungsgemäßes reaktives Einkomponenten-Granulat auf Basis isocyanatterminierter Polymere (Ausführungsbeispiel nach der ersten Ausführungsform)

Eine Mischung aus
- 60 Gew.-% Polyester mit einem mittleren Molekularverhältnis von ca. 20.000 g/mol und einer Hydroxylzahl von 5,
- 20 Gew.-% Ethylen/Vinylacetat-Copolymer mit einem VA-Gehalt von 18 % und einem Schmelzindex von ca. 150,
- 20 Gew.-% niedrigmolekulares aromatisches Kohlenwasserstoffharz mit einem Erweichungsbereich von 75 °C bis 85 °C und einer Säurezahl von kleiner als 1 mg/KOH
wird aufgeschmolzen und in einem Mischungsverhältnis von 7 : 1 mit 1-Isocyanato-3-isocyanatomethyl-3,5,5-trimethylcyclohexan (IPDI; Isocyanatgehalt: 17 %; Funktionalität zwischen 3 und 4) versetzt. Man läßt die Mischung bei 200 °C innig miteinander reagieren.

Die so hergestellte Mischung wird anschließend mittels Unterwassergranulation gemäß üblicher Methoden zu Granulaten verarbeitet. Dafür wird die Schmelze in extrudierbarer Form nahe dem nach der Ring- und Kugelmethode gemessenen Erweichungspunkt durch eine Öffnung einer Formplatte in Wasser hineinextrudiert. Bei ihrem Austritt aus der Formplatte wird die extrudierte Masse durch ein rotierendes Messer zerkleinert. Das erhaltene Produkt wird aus dem Wasser entfernt und anschließend durch z. B. Abpudern oder Evakuierung von Restfeuchtigkeit getrocknet. Man erhält ein Einkomponenten-Klebstoffgranulat, mit dem es beispielsweise möglich ist, auf bekannte Profilummantelungen mit Furnier, dekorativen Papier- oder Kunststoff-Folien, im Kern aus MDF oder Spanplatte bestehende Profile herzustellen.

### Beispiel 2: Erfindungsgemäßes reaktives Einkomponenten-Granulat auf Basis silanfunktioneller Polymere (Ausführungsbeispiel nach der zweiten Ausführungsform)

Eine Mischung aus
- 31,2 Gew.-% Polyolefin der Marke Vestoplast® 708 der Degussa Hüls AG,
- 62,4 Gew.-% Kohlenwasserstoffharz der Marke Escorez® 5320 der Exxon Deutschland GmbH,
- 6,2 Gew.-% Wachs der Marke Paraflint und
- 0,2 Gew.-% Dibutylzinndilaureat (DBTL) der Huntsmann Corp.
werden in einem Mischungsverhältnis 1: 1,9 zusammen mit einer Mischung aus
- 95 Gew.-% silanisiertem Polyolefin der Marke Vestoplast® 206 der Degussa Hüls AG und
- 5 Gew.-% PE-Wachs (Polywachs 1000)
aufgeschmolzen. Man homogenisiert die Mischung bei 200 °C innig miteinander.

Die so hergestellte Mischung wird anschließend analog dem Beispiel 1 zu Granulaten verarbeitet. Man erhält einen silanfunktionellen Einkomponenten-Schmelzklebstoff in Granulatform, mit dem es beispielsweise möglich ist, auf bekannte Profilummantelungen mit Furnier, dekorativen Papier- oder Kunststoff-Folien, im Kern aus MDF oder Spanplatte bestehende Profile herzustellen.

## Patentansprüche

1. Verfahren zur Herstellung eines reaktiven Einkomponenten-Granulats, insbesondere Einkomponenten-Beschichtungs- und/oder -Klebstoffgranulats, **gekennzeichnet durch** die folgenden Verfahrensschritte:
(a) Herstellung einer Mischung, enthaltend:
(i) 2 bis 30 Gew.-% mindestens eines Di- und/oder Polyisocyanats,
(ii) 30 bis 70 Gew.-% mindestens eines isocyanatreaktiven Ausgangspolymers,
(iii) 5 bis 30 Gew.-% eines nichtisocyanatreaktiven Wachses, Harzes und/oder Polymers, ausgewählt aus der Gruppe von Ethylen/Vinylacetat-Polymeren und -Copolymeren, Polyolefinen, (Meth-)Acrylaten und Styrol(meth-)acrylaten sowie Mischungen dieser Verbindungen;
(iv) gegebenenfalls mindestens einen Katalysator,
unter Aufschmelzen der Mischungsbestandteile und/oder Erwärmen bis in einen viskosen oder fließfähigen Zustand,
wobei die Herstellung der Mischung derart erfolgt, daß ein Überschuß an Di- und/oder Polyisocyanat in der erhaltenden Mischung vorliegt mit der Maßgabe, daß der Gehalt an freien NCO-Gruppen in der erhaltenen Mischung 0,5 bis 30 Gew.-% beträgt;
(b) Herstellung eines Granulats ausgehend von der aus (a) resultierenden Mischung, insbesondere Schmelze.

2. Verfahren nach Anspruch 1, **dadurch gekennzeichnet, daß** bei der Herstellung der Mischung in Schritt (a) zunächst das isocyanatreaktive Ausgangspolymer geschmolzen und in diese Schmelze das Di- und/oder Polyisocyanat eingetragen wird.

3. Verfahren nach Anspruch 1 oder 2, **dadurch gekennzeichnet, daß** die Herstellung der Mischung in Schritt (a) in Gegenwart mindestens eines Zusatzstoffes erfolgt.

4. Verfahren nach einem der Ansprüche 1 bis 3, **dadurch gekennzeichnet, daß** nach Schritt (b) ein Abpudern oder Coaten des in Schritt (b) hergestellten Granulats mit üblichen Methoden erfolgt.

5. Verfahren nach einem der Ansprüche 1 bis 4, **dadurch gekennzeichnet, daß** die Herstellung der Mischung in Schritt (a) unter Feuchtigkeitsausschluß durchgeführt wird.

6. Verfahren nach einem der Ansprüche 1 bis 5, **dadurch gekennzeichnet, daß** das isocyanatreaktive Ausgangspolymer vor und/oder während der Herstellung der Mischung in Schritt (a) durch Evakuieren getrocknet wird.

7. Verfahren nach einem der Ansprüche 1 bis 6, **dadurch gekennzeichnet, daß** die in Schritt (a) durchgeführte Herstellung der Mischung aus Di- und/oder Polyisocyanat und isocyanatreaktivem Ausgangspolymer derart erfolgt, daß ein Überschuß an Di- und/oder Polyisocyanat in der unter (a) erhaltenen Mischung vorliegt mit der Maßgabe, daß der Gehalt an freien, vorzugsweise endständigen NCO-Gruppen in der in Schritt (a) erhaltenen Mischung 0,5 Gew.-% bis 10 Gew.-%, vorzugsweise 0,5 Gew.-% bis 5 Gew.-%, besonders bevorzugt 0,5 Gew.-% bis 3 Gew.-%, beträgt.

8. Verfahren nach einem der Ansprüche 1 bis 7, **dadurch gekennzeichnet, daß** zur Herstellung der Mischung in Schritt (a) die Menge an Di- und/oder Polyisocyanat 5 Gew.-% bis 20 Gew-%, vorzugsweise 8 Gew.-% bis 15 Gew.-%, beträgt und/oder daß zur Herstellung der Mischung in Schritt (a) die Menge an isocyanatreaktivem Ausgangspolymer 40 Gew.-% bis 60 Gew.-%, vorzugsweise 45 Gew.-% bis 55 Gew.-%, beträgt und/oder daß zur Herstellung der Mischung in Schritt (a) die Menge an nichtisocyanatreaktivem Wachs, Harz und/oder Polymer 10 Gew.-% bis 25 Gew.-%, vorzugsweise 15 Gew.-% bis 20 Gew.-%, beträgt.

9. Verfahren nach einem der Ansprüche 1 bis 8, **dadurch gekennzeichnet, daß** die mittlere Molekularmasse des isocyanatreaktiven Ausgangspolymers mehr als 8.000 g/mol, insbesondere 10.000 bis 50.000 g/mol, vorzugsweise 10.000 bis 30.000 g/mol beträgt.

10. Verfahren nach einem der Ansprüche 1 bis 9, **dadurch gekennzeichnet, daß** das isocyanatreaktive Ausgangspolymer mindestens zwei gegenüber Isocyanaten reaktive Gruppen je Molekül aufweist, insbesondere Hydroxyl-, Amino-, Carboxyl-, Carbonsäureanhydrid-, Mercapto- und/oder gegebenenfalls substituierte Silylgruppen, und/oder daß das isocyanatreaktive Ausgangspolymer mindestens zwei gegenüber Isocyanaten und/oder Polyisocyanaten reaktive Wasserstoffatome je Molekül aufweist.

11. Verfahren nach einem der Ansprüche 1 bis 10, **dadurch gekennzeichnet, daß** das isocyanatreaktive Ausgangspolymer ausgewählt ist aus der Gruppe von isocyanatreaktiven Polyestern, Polycaprolactonpolyestem, Polyethern, Polyurethanen, Polyamiden, Polytetrahydrofuranen, Polyacrylaten und Polymethacrylaten, jeweils insbesondere mit isocyanatreaktiven Wasserstoffatomen, vorzugsweise Hydroxylgruppen.

12. Verfahren nach einem der Ansprüche 1 bis 11, **dadurch gekennzeichnet, daß** das isocyanatreaktive Ausgangspolymer eine Hydroxylzahl von mindestens 15 mg KOH/g, insbesondere mindestens 20 mg KOH/g, vorzugsweise mindestens 25 mg KOH/g, besonders bevorzugt mindestens 30 mg KOH/g, aufweist.

13. Verfahren nach einem der Ansprüche 1 bis 12, **dadurch gekennzeichnet, daß** das isocyanatreaktive Ausgangspolymer sich von isocyanatreaktiven Copolymeren ableitet.

14. Verfahren nach einem der Ansprüche 1 bis 13, **dadurch gekennzeichnet, daß** das Di- und/oder Polyisocyanat ein aliphatisches und/oder aromatisches Di- und/oder Polyisocyanat ist, insbesondere mit freien, vorzugsweise endständigen NCO-Gruppen.

15. Verfahren nach einem der Ansprüche 1 bis 14, **dadurch gekennzeichnet, daß** das Di- und/oder Polyisocyanat ausgewählt ist aus der Gruppe von Diisocyanatodiphenylmethanen (MDIs), insbesondere 4,4'-Diisocyanatodiphenylmethan und 2,4'-Diisocyanatodiphenylmethan, sowie Mischungen verschiedener Diisocyanatodiphenylmethane; 1,5-Diisocyanatonaphthalin (NDI); Diisocyanatotoluolen (TDIs), insbesondere 2,4-Diisocyanatotoluol, sowie TDI-Urethdionen, insbesondere dimerem 1-Methyl-2,4-phenylen-diisocyanat (TDI-U), und TDI-Harnstoffen; 1-Isocyanato-3-isocyanatomethyl-3,5,5-trimethylcyclohexan (IPDI) und dessen Isomeren und Derivaten, insbesondere Di-, Tri- und Polymerisaten, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); sowie Mischungen und Prepolymeren der zuvor genannten Verbindungen.

16. Verfahren nach einem der Ansprüche 1 bis 15, **dadurch gekennzeichnet, daß** das Di- und/oder Polyisocyanat unsymmetrisch substituiert ist und insbesondere zwei NCO-Gruppen unterschiedlicher Reaktivität aufweist.

17. Verfahren nach einem der Ansprüche 1 bis 16, **dadurch gekennzeichnet, daß** das Diisocyanat ein Gemisch aus 4,4'-Diisocyanatodiphenylmethan und 2,4'-Diisocyanatodiphenylmethan ist, vorzugsweise mit einem Gehalt an 2,4'-Diisocyanatodiphenylmethan von mehr als 20 Gew.-%, insbesondere mehr als 30 Gew.-%, bevorzugt mehr als 40 Gew.-%, ganz besonders bevorzugt mehr als 50 Gew.-%, bezogen auf das Isocyanatgemisch.

18. Verfahren nach einem der Ansprüche 1 bis 17, **dadurch gekennzeichnet, daß** das Diisocyanat 2,4'-Diisocyanatodiphenylmethan ist.

19. Verfahren nach einem der Ansprüche 1 bis 18, **dadurch gekennzeichnet, daß** das Di- und/oder Polyisocyanat ein maskiertes oder blockiertes Di- und/oder Polyisocyanat ist, welches insbesondere unter Wärme- und/oder Feuchtigkeitseinwirkung die blockierenden oder maskierenden Gruppen abspaltet.

20. Verfahren nach einem der Ansprüche 1 bis 18, **dadurch gekennzeichnet, daß** das Di- und/oder Polyisocyanat ein verkapseltes oder oberflächendesaktiviertes Di- und/oder Polyisocyanat ist, insbesondere wobei die Verkapselung oder Oberflächendesaktivierung vorzugsweise bei Temperaturen oberhalb der Raumtemperatur aufgebrochen wird.

21. Verfahren nach einem der Ansprüche 1 bis 20, **dadurch gekennzeichnet, daß** der Katalysator und/oder das nichtisocyanatreaktive Wachs, Harz und/oder Polymer vorzugsweise homogen über die isocyanatreaktive Ausgangspolymerphase verteilt sind.

22. Verfahren nach einem der Ansprüche 1 bis 21, **dadurch gekennzeichnet, daß** der Katalysator insbesondere ein in der Polyurethanchemie gängiger und bekannter Katalysator ist und vorzugsweise ausgewählt ist aus der Gruppe von organischen Zinnverbindungen wie Dibutylzinndilaurat (DBTL), Alkylmercaptidverbindungen des Dibutylzinns, organischen Eisen-, Blei-, Cobalt-, Wismuth-, Antimon-, Zinkverbindungen, Katalysatoren auf Aminbasis wie tertiären Amine, 1,4-Diazabicyclo[2.2.2]octan, Dimorpholinodiethylether und Mischungen der zuvor genannten Verbindungen.

23. Verfahren nach einem der Ansprüche 1 bis 22, **dadurch gekennzeichnet, daß** das nichtisocyanatreaktive Polymer ausgewählt ist aus der Gruppe von (i) Ethylen/Vinylacetat-Polymeren oder -Copolymeren mit Vinylacetat-Gehalten zwischen 12 und 40 Gew.-%, insbesondere 18 bis 28 Gew.-%, und/oder mit Schmelzindizes (MFIs, DIN 53735) von 8 bis 800, insbesondere 150 bis 500; (ii) Polyolefinen mit mittleren Molekulargewichten von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C; und (iii) (Meth-)acrylaten wie Styrol(meth-)acrylaten; sowie Mischungen dieser Verbindungen.

24. Verfahren zur Herstellung eines reaktiven Einkomponenten-Granulats, insbesondere Einkomponenten-Beschichtungs- und/oder Klebstoffgranulats, **gekennzeichnet durch** die folgenden Verfahrensschritte:
(a) Herstellung der Mischung, die mindestens ein silanfunktionelles Polyolefin, mindestens ein nichtsilanfunktionelles Polyolefin und mindestens einen Katalysator enthält, vorzugsweise unter Aufschmelzen der Mischungsbestandteile und/oder Erwärmen bis in einen viskosen oder fließfähigen Zustand;
(b) Herstellung eines Granulats ausgehend von der aus (a) resultierenden Mischung, insbesondere Schmelze.

25. Verfahren nach Anspruch 24, **dadurch gekennzeichnet, daß** die Herstellung der Mischung in Schritt (b) durch gleichzeitiges Schmelzen aller Komponenten erfolgt.

26. Verfahren nach Anspruch 24 oder 25, **dadurch gekennzeichnet, daß** die Herstellung der Mischung in Schritt (a) unter Feuchtigkeitsausschluß durchgeführt wird und/oder in Gegenwart mindestens eines Wachses und/oder mindestens eines Harzes und/oder mindestens eines Zusatzstoffes erfolgt.

27. Verfahren nach einem der Ansprüche 24 bis 26, **dadurch gekennzeichnet, daß** nach Schritt (b) ein Abpudern oder Coaten des in Schritt (b) hergestellten Granulats mit üblichen Methoden erfolgt.

28. Verfahren nach einem der Ansprüche 24 bis 27, **dadurch gekennzeichnet, daß** zur Herstellung der Mischung in Schritt (a) die Menge an silanfunktionellem Polyolefin 40 Gew.-% bis 80 Gew.-%, insbesondere 50 Gew.-% bis 70 Gew-%, vorzugsweise 60 Gew.-% bis 70 Gew.-%, beträgt und/oder daß zur Herstellung der Mischung in Schritt (a) die Menge an nichtsilanfunktionellem Polyolefin 5 Gew.-% bis 20 Gew.-%, insbesondere 8 Gew.-% bis 17 Gew.-%, vorzugsweise 10 Gew.-% bis 15 Gew.-%, beträgt und/oder daß zur Herstellung der Mischung in Schritt (a) die Menge an Harz 5 Gew.-% bis 30 Gew.-%, insbesondere 10 Gew.-% bis 25 Gew.-%, vorzugsweise 15 Gew.-% bis 20 Gew.-%, beträgt und/oder daß zur Herstellung der Mischung in Schritt (a) die Menge an Wachs 0,5 Gew.-% bis 3 Gew.-%, insbesondere 1 Gew.-% bis 2,5 Gew.-%, vorzugsweise 1,5 Gew.-% bis 2,0 Gew.-%, beträgt und/oder daß zur Herstellung der Mischung in Schritt (a) die Menge an Katalysator 0,02 Gew.-% bis 0,3 Gew.-%, insbesondere 0,04 Gew.-% bis 0,2 Gew.-%, vorzugsweise 0,5 Gew.-% bis 1,0 Gew.-%, beträgt.

29. Verfahren nach einem der Ansprüche 24 bis 28, **dadurch gekennzeichnet, daß** das silanfunktionelle Polyolefin ein insbesondere amorphes silanfunktionelles Poly-α-olefin ist

30. Verfahren nach einem der Ansprüche 24 bis 29, **dadurch gekennzeichnet, daß** das silanfunktionelle Polyolefin ein silanterminiertes Polyolefin ist.

31. Verfahren nach einem der Ansprüche 24 bis 30, **dadurch gekennzeichnet, daß** das silanfunktionelle Polyolefin durch Pfropfung eines Polyolefins mit Silanfunktionen erhältlich ist.

32. Verfahren nach einem der Ansprüche 24 bis 31, **dadurch gekennzeichnet, daß** das silanfunktionelle Polyolefin ein mit Trialkoxysilylgruppen, insbesondere Trimethoxysilylgruppen oder Triethoxysilylgruppen, modifiziertes Polyolefin ist.

33. Verfahren nach einem der Ansprüche 24 bis 32, **dadurch gekennzeichnet, daß** das silanfunktionelle Polyolefin ein mittleres Molekulargewicht von 10.000 g/mol bis 60.000 g/mol, insbesondere 20.000 g/mol bis 50.000 g/mol, vorzugsweise 30.000 g/mol bis 40.000 g/mol, aufweist und/oder daß das silanfunktionelle Polyolefin eine Schmelzviskosität von 1.000 mPas bis 15.000 mPas, insbesondere 2.000 mPas bis 10.000 mPas, vorzugsweise 3.000 mPas bis 7.000 mPas, aufweist und/oder daß das silanfunktionelle Polyolefin eine Glasübergangstemperatur nach seiner Herstellung von -20 °C bis -40 °C, insbesondere -23 °C bis -35 °C, vorzugsweise -25 °C bis -30 °C, aufweist und/oder daß das silanfunktionelle Polyolefin eine Dichte bei 23 °C von 0,65 g/cm³ bis 1,30 g/cm³, insbesondere 0,70 g/cm³ bis 1,20 g/cm³, vorzugsweise 0,75 g/cm³ bis 1,10 g/cm³, besonders bevorzugt von 0,80 g/cm³ bis 1,00 g/cm³, aufweist.

34. Verfahren nach einem der Ansprüche 24 bis 33, **dadurch gekennzeichnet, daß** das nichtsilanfunktionelle Polyolefin ein insbesondere amorphes Poly-α-olefin ist.

35. Verfahren nach einem der Ansprüche 26 bis 34, **dadurch gekennzeichnet, daß** der Katalysator und/oder das Wachs und/oder das Harz homogen über die Polyolefinphase(n) verteilt sind.

36. Verfahren nach einem der Ansprüche 24 bis 35, **dadurch gekennzeichnet, daß** der Katalysator ein in der Polyolefinchemie gängiger und bekannter Katalysator ist, der insbesondere ausgewählt ist aus der Gruppe von organometallischen Verbindungen der Übergangsmetalle, vorzugsweise organischen Verbindungen der Metalle Zink, Eisen, Blei, Cobalt, Wismuth, Antimon und Zinn wie Dibutylzinndilaurat.

37. Verfahren nach einem der Ansprüche 26 bis 36, **dadurch gekennzeichnet, daß** das Harz vorzugsweise aus der Gruppe der aliphatischen, cyclischen oder cycloaliphatischen Kohlenwasserstoff-Harze, der Terpenphenolharze, der Cumaron-Indenharze, der α-Methylstyrolharze, der polymerisierten Tallharzester und/oder der Ketonaldehydharze ausgewählt ist.

38. Verfahren nach einem der Ansprüche 26 bis 37, **dadurch gekennzeichnet, daß** der Wachs insbesondere ein Polyolefinwachs, vorzugsweise Polyethylen- und Polypropylenwachs, oder ein auf dieser Basis modifiziertes Wachs ist.

39. Verfahren nach einem der Ansprüche 3 bis 23 und 26 bis 38, **dadurch gekennzeichnet, daß** die Zusatzstoffe für reaktive Beschichtungs- und Klebstoffe an sich bekannte Zusatzstoffe, wie insbesondere Weichmacher auf Phthalsäure- und/ oder Phosphorsäureesterbasis, Glycolacetat, hochsiedende organische Öle, Ester oder andere der Plastifizierung dienende Additive, Stabilisatoren, Antioxidantien, Säurefänger und/oder Alterungsschutzmittel, sind.

40. Verfahren nach einem der Ansprüche 1 bis 39, **dadurch gekennzeichnet, daß** in Schritt (b) die Herstellung des Granulats durch Unterwassergranulation und/oder mit Hilfe eines insbesondere gekühlten, vorzugsweise bewegten, Austragebandes erfolgt.

41. Verfahren nach Anspruch 40, **dadurch gekennzeichnet, daß** bei der in Schritt (b) durchgeführten Unterwassergranulation die Schmelze in extrudierbarer Form nahe dem nach der Ring- und Kugelmethode gemessenen Erweichungspunkt bereitgestellt wird und die Schmelze durch mindestens eine Öffnung einer Formplatte in eine kühlende Flüssigkeit, insbesondere Wasser, extrudiert wird, wobei die Schmelze bei ihrem Austritt aus der Formplatte, insbesondere durch rotierende Messer, zerkleinert wird.

42. Verfahren nach Anspruch 40, **dadurch gekennzeichnet, daß** die Herstellung des Granulats mittels Austragebandes unter Feuchtigkeitsausschluß erfolgt.

43. Reaktives Einkomponenten-Granulat, insbesondere Einkomponenten-Beschichtungs- und/oder -Klebstoffgranulat, erhältlich nach dem Verfahren gemäß den Ansprüchen 1 bis 23 und 39 bis 42.

44. Reaktives Einkomponenten-Granulat, insbesondere Einkomponenten-Beschichtungs- und/oder -Klebstoffgranulat, enthaltend
(i) 2 bis 30 Gew.-% mindestens eines Di- und/oder Polyisocyanats,
(ii) 30 bis 70 Gew.-% mindestens eines isocyanatreaktiven Ausgangspolymers,
(iii) 5 bis 30 Gew.-% eines nichtisocyanatreaktiven Wachses, Harzes und/ oder Polymers, ausgewählt aus der Gruppe von Ethylen/Vinylacetat-Polymeren und -Copolymeren, Polyolefinen, (Meth-)Acrylaten und Styrol(meth-)acrylaten sowie Mischungen dieser Verbindungen;
(iv) gegebenenfalls mindestens einen Katalysator,
wobei das Granulat einen Überschuß an Di- und/oder Polyisocyanat aufweist mit der Maßgabe, daß der Gehalt an freien NCO-Gruppen 0,5 Gew.-% bis 30 Gew.-% beträgt, bezogen aus das Granulat.

45. Reaktives Einkomponenten-Granulat, insbesondere Einkomponenten-Beschichtungs und/oder -Klebstoffgranulat, nach Anspruch 44, **dadurch gekennzeichnet, daß** der Gehalt an freien, vorzugsweise endständigen NCO-Gruppen 0,5 Gew.-% bis 10 Gew.-%, vorzugsweise 0,5 Gew.-% bis 5 Gew.-%, besonders bevorzugt 0,5 Gew.-% bis 3 Gew.-%, beträgt, bezogen aus das Granulat.

46. Reaktives Einkomponenten-Granulat, insbesondere Einkomponenten-Beschichtungs und/oder -Klebstoffgranulat, nach Anspruch 44 oder 45, **gekennzeichnet durch** die Merkmale des kennzeichnenden Teils eines oder mehrerer der Ansprüche 7 bis 23 und 39.

47. Reaktives Einkomponenten-Granulat, insbesondere Einkomponenten-Beschichtungs- und/oder -Klebstoffgranulat auf Polyolefinbasis, erhältlich nach dem Verfahren gemäß den Ansprüchen 24 bis 42.

48. Reaktives Einkomponenten-Granulat, insbesondere Einkomponenten-Beschichtungs und/oder -Klebstoffgranulat, enthaltend mindestens ein silanfunktionelles Polyolefin, mindestens ein nichtsilanfunktionelles Polyolefin und mindestens einen Katalysator und gegebenenfalls mindestens einen Wachs und/oder Harz und gegebenenfalls mindestens einen Zusatzstoff.

49. Reaktives Einkomponenten-Granulat, insbesondere Einkomponenten-Beschichtungs und/oder -Klebstoffgranulat, nach Anspruch 48, **gekennzeichnet durch** die Merkmale des kennzeichnenden Teils eines oder mehrerer der Ansprüche 28 bis 39.

50. Verwendung eines reaktiven Einkomponenten-Granulat, insbesondere Einkomponenten-Beschichtungs und/oder -Klebstoffgranulats, nach den Ansprüchen 43 bis 49 zum Verkleben insbesondere von Schaumpolstem, Polstermöbeln und Matratzen oder für kontinuierliche Beschichtungszwecke wie Profilummantelungen, wobei die Aufbringung insbesondere durch Sprüh-, Spritz-, Düsen- oder Walzauftrag erfolgt.

## Claims

1. Process for preparing reactive one-component granules, especially one-component coating-material and/or adhesive granules, **characterized by** the following process steps:
(a) preparation of a mixture comprising:
(i) 2 % to 30 % by weight of at least one diisocyanate and/or polyisocyanate,
(ii) 30 % to 70 % by weight of at least one isocyanate-reactive starting polymer,
(iii) 5 % to 30 % by weight of a non-isocyanate-reactive wax, resin and/or polymer, selected from the group of ethylene/vinyl acetate polymers and copolymers, polyolefins, (meth)acrylates and styrene-(meth)acrylates and also mixtures of these compounds,
(iv) optionally, at least one catalyst,
with melting of the constituents of the mixture and/or heating until they are brought into a viscous or fluid state,
the mixture being prepared such that there is an excess of diisocyanate and/or polyisocyanate in the resultant mixture, with the proviso that the amount of free NCO groups in the resulting mixture is 0.5 % to 30 % by weight;
(b) preparation of granules starting from the mixture, in particular a melt, resulting from (a).

2. Process according to Claim 1, **characterized in that** in the preparation of the mixture in step (a) first the isocyanate-reactive starting polymer is melted and the diisocyanate and/or polyisocyanate is introduced into this melt.

3. Process according to Claim 1 or 2, **characterized in that** the mixture is prepared in step (a) in the presence of at least one additive.

4. Process according to one of Claims 1 to 3, **characterized in that** after step (b) the granules prepared in step (b) are powdered or coated by customary methods.

5. Process according to one of Claims 1 to 4, **characterized in that** the mixture is prepared in step (a) in the absence of moisture.

6. Process according to one of Claims 1 to 5, **characterized in that** the isocyanate-reactive starting polymer is dried by evacuation before and/or during the preparation of the mixture in step (a).

7. Process according to one of Claims 1 to 6, **characterized in that** the mixture of diisocyanate and/or polyisocyanate and isocyanate-reactive starting polymer is prepared in step (a) such that there is an excess of diisocyanate and/or polyisocyanate in the mixture obtained under (a), with the proviso that the amount of free, preferably terminal NCO groups in the mixture obtained in step (a) is 0.5 % by weight to 10 % by weight, preferably 0.5 % by weight to 5 % by weight and more preferably 0.5 % by weight to 3 % by weight.

8. Process according to one of Claims 1 to 7, **characterized in that** for preparing the mixture in step (a) the amount of diisocyanate and/or polyisocyanate is 5 % by weight to 20 % by weight, preferably 8 % by weight to 15 % by weight and/or **in that** for preparing the mixture in step (a) the amount of isocyanate-reactive starting polymer is 40 % by weight to 60 % by weight, preferably 45 % by weight to 55 % by weight, and/or **in that** for preparing the mixture in step (a) the amount of non-isocyanate-reactive wax, resin and/or polymer is 10 % by weight to 25 % by weight, preferably 15 % by weight to 20 % by weight.

9. Process according to one of Claims 1 to 8, **characterized in that** the average molecular mass of the isocyanate-reactive starting polymer is more than 8.000 g/mol, in particular 10.000 to 50.000 g/mol, preferably 10.000 to 30.000 g/mol.

10. Process according to one of Claims 1 to 9, **characterized in that** the isocyanate-reactive starting polymer has at least two isocyanate-reactive groups per molecule, in particular hydroxyl, amino, carboxyl, carboxylic anhydride, mercapto and/or optionally substituted silyl groups, and/or **in that** the isocyanate-reactive starting polymer has at least two hydrogen atoms reactive towards isocyanates and/or polyisocyanates per molecule.

11. Process according to one of Claims 1 to 10, **characterized in that** the isocyanate-reactive starting polymer is selected from the group consisting of isocyanate-reactive polyesters, polycaprolactone polyesters, polyethers, polyurethanes, polyamides, polytetrahydrofurans, polyacrylates and polymethacrylates, in each case in particular with isocyanate-reactive hydrogen atoms, preferably hydroxyl groups.

12. Process according to one of Claims 1 to 11, **characterized in that** the isocyanate-reactive starting polymer has a hydroxyl number of at least 15 mg KOH/g, in particular at least 20 mg KOH/g, preferably at least 25 mg KOH/g, more preferably at least 30 mg KOH/g.

13. Process according to one of Claims 1 to 12, **characterized in that** the isocyanate-reactive starting polymer derives from isocyanate-reactive copolymers.

14. Process according to one of Claims 1 to 13, **characterized in that** the diisocyanate and/or polyisocyanate is an aliphatic and/or aromatic diisocyanate and/or polyisocyanate, in particular with free, preferably terminal NCO groups.

15. Process according to one of Claims 1 to 14, **characterized in that** the diisocyanate and/or polyisocyanate is selected from the group consisting of diisocyanatodiphenylmethanes (MDIs), especially 4,4'-diisocyanatodiphenylmethane and 2,4'-diisocyanatodiphenylmethane, and also mixtures of different diisocyanatodiphenylmethanes; 1,5-diisocyanatonaphthalene (NDI); diisocyanatotoluenes (TDIs), especially 2,4-diisocyanatotoluene, and also TDI uretdiones, especially dimeric 1-methyl-2,4-phenylene diisocyanate (TDI-U), and TDI ureas; 1-isocyanato-3-isocyanatomethyl-3,5,5-trimethylcyclohexane (IPDI) and its isomers and derivatives, especially dimers, trimers and polymers, and also IPDI isocyanurate (IPDI-T); 3,3'-dimethylbiphenyl 4,4'-diisocyanate (TODI); 3,3'-diisocyanato-4,4'-dimethyl-N,N'-diphenylurea (TDIH); and also mixtures and prepolymers of the aforementioned compounds.

16. Process according to one of Claims 1 to 15, **characterized in that** the diisocyanate and/or polyisocyanate is asymmetrically substituted and in particular has two NCO groups differing in reactivity.

17. Process according to one of Claims 1 to 16, **characterized in that** the diisocyanate is a mixture of 4,4'-diisocyanatodiphenylmethane and 2,4'-diisocyanatodiphenylmethane, preferably having a 2,4'-diisocyanatodiphenylmethane content of more than 20% by weight, in particular more than 30% by weight, preferably more than 40% by weight and very preferably more than 50% by weight, based on the isocyanate mixture.

18. Process according to one of Claims 1 to 17, **characterized in that** the diisocyanate is 2,4'-diisocyanatodiphenylmethane.

19. Process according to one of Claims 1 to 18, **characterized in that** the diisocyanate and/or polyisocyanate is a masked or blocked diisocyanate and/or polyisocyanate, which eliminates the blocking or masking groups in particular on exposure to heat and/or moisture.

20. Process according to one of Claims 1 to 18, **characterized in that** the diisocyanate and/or polyisocyanate is an encapsulated or surface-deactivated diisocyanate and/or polyisocyanate, the encapsulation or surface deactivation in particular being broken up preferably at temperatures above room temperature.

21. Process according to one of Claims 1 to 20, **characterized in that** the catalyst and/or the non-isocyanate-reactive wax, resin and/or polymer are preferably distributed homogeneously over the isocyanate-reactive starting polymer phase.

22. Process according to one of Claims 1 to 21, **characterized in that** the catalyst is in particular a catalyst which is known and common in polyurethane chemistry and is preferably selected from the group consisting of organotin compounds such as dibutyltin dilaurate (DBTL), alkyl mercaptide compounds of dibutyltin, organic iron, lead, cobalt, bismuth, antimony and zinc compounds, amine-based catalysts such as tertiary amines, 1,4-diazabicyclo[2.2.2]octane, dimorpholinodiethyl ether and mixtures of the aforementioned compounds.

23. Process according to one of Claims 1 to 22, **characterized in that** the non-isocyanate-reactive polymer is selected from the group consisting of (i) ethylene/vinyl acetate polymers or copolymers having vinyl acetate contents of between 12 and 40 % by weight, in particular 18 to 28 % by weight, and/or having melt indices (MFIs, DIN 53735) of 8 to 800, especially 150 to 500; (ii) polyolefins having average molecular weights of 5.000 to 25.000 g/mol, preferably 10.000 to 20.000 g/mol, and/or having ring-and-ball softening ranges between 80 and 170 °C, preferably between 80 to 130 °C; and (iii) (meth)acrylates such as styrene (meth)acrylates, and mixtures of these compounds.

24. Process for preparing reactive one-component granules, especially one-component coating-material and/or adhesive granules, **characterized by** the following process steps:
(a) preparation of the mixture comprising at least one silane-functional polyolefin, at least one non-silane-functional polyolefin and at least one catalyst, preferably with melting of the constituents of the mixture and/or heating until they are brought into a viscous or fluid state;
(b) preparation of granules starting from the mixture, in particular a melt, resulting from (a).

25. Process according to Claim 24, **characterized in that** the mixture is prepared in step (b) by simultaneously melting all the components.

26. Process according to Claim 24 or 25, **characterized in that** the mixture is prepared in step (a) in the absence of moisture and/or in the presence of at least one wax and/or at least one resin and/or at least one additive.

27. Process according to one of Claims 24 to 26, **characterized in that** after step (b) the granules prepared in step (b) are powdered or coated by customary methods.

28. Process according to one of Claims 24 to 27, **characterized in that** for preparing the mixture in step (a) the amount of silane-functional polyolefin is 40 % by weight to 80 % by weight, in particular 50 % by weight to 70 % by weight, preferably 60 % by weight to 70 % by weight and/or **in that** for preparing the mixture in step (a) the amount of non-silane-functional polyolefin is 5 % by weight to 20 % by weight, in particular 8 % by weight to 17 % by weight, preferably 10 % by weight to 15 % by weight and/or **in that** for preparing the mixture in step (a) the amount of resin is 5 % by weight to 30 % by weight, in particular 10 % by weight to 25 % by weight, preferably 15 % to 20 % by weight and/or **in that** for preparing the mixture in step (a) the amount of wax is 0.5 % by weight to 3 % by weight, in particular 1 % by weight to 2.5 % by weight, preferably 1.5 % by weight to 2.0 % by weight and/or **in that** for preparing the mixture in step (a) the amount of catalyst is 0.02 % by weight to 0.3 % by weight, in particular 0.04 % by weight to 0.2 % by weight, preferably 0.5 % by weight to 1.0 % by weight.

29. Process according to one of Claims 24 to 28, **characterized in that** the silane-functional polyolefin is a silane-functional poly-α-olefin, in particular an amorphous silane-functional poly-α-olefin.

30. Process according to one of Claims 24 to 29, **characterized in that** the silane-functional polyolefin is a silane-terminated polyolefin.

31. Process according to one of Claims 24 to 30, **characterized in that** the silane-functional polyolefin is obtainable by grafting a polyolefin with silane functions.

32. Process according to one of Claims 24 to 31, **characterized in that** the silane-functional polyolefin is a polyolefin modified with trialkoxysilyl groups, especially trimethoxysilyl groups or triethoxysilyl groups.

33. Process according to one of Claims 24 to 32, **characterized in that** the silane-functional polyolefin has an average molecular weight of 10.000 g/mol to 60.000 g/mol, in particular 20.000 g/mol to 50.000 g/mol, preferably 30.000 g/mol to 40.000 g/mol and/or **in that** the silane-functional polyolefin has a melt viscosity of 1.000 mPas to 15.000 mPas. in particular 2.000 mPas to 10.000 mPas, preferably 3.000 mPas to 7.000 mPas and/or **in that** the silane-functional polyolefin has a glass transition temperature after its preparation of -20 °C to -40 °C, in particular -23 °C to -35 °C, preferably -25 °C to -30 °C and/or **in that** the silane-functional polyolefin has a density at 23 °C of 0.65 g/cm³ to 1.30 g/cm³, in particular 0.70 g/cm³ to 1.20 g/cm³, preferably 0.75 g/cm³ to 1.10 g/cm³, more preferably from 0.80 g/cm³ to 1.00 g/cm³.

34. Process according to one of Claims 24 to 33, **characterized in that** the non-silane-functional polyolefin is in particular an amorphous poly-α-olefin.

35. Process according to one of Claims 26 to 34, **characterized in that** the catalyst and/or the wax and/or the resin are distributed homogeneously over the polyolefin phase(s).

36. Process according to one of Claims 24 to 35, **characterized in that** the catalyst is a catalyst which is known and common in polyolefin chemistry and is selected in particular from the group consisting of organometallic compounds of the transition metals, preferably organic compounds of the metals zinc, iron, lead, cobalt, bismuth, antimony and tin such as dibutyltin dilaurate.

37. Process according to one of Claims 26 to 36, **characterized in that** the resin is selected preferably from the group consisting of aliphatic, cyclic and cycloaliphatic hydrocarbon resins, terpene-phenolic resins, coumarone-indene resins, α-methylstyrene resins, polymerized tall resin esters and/or ketone-aldehyde resins.

38. Process according to one of Claims 26 to 37, **characterized in that** the wax is in particular a polyolefin wax, preferably polyethylene wax and polypropylene wax, or a wax modified on this basis.

39. Process according to one of Claims 3 to 23 and 26 to 38, **characterized in that** the additives are additives known per se for reactive coating materials and adhesives, such as, in particular, phthalic- and/or phosphoric ester-based plasticizers, glycol acetate, high-boiling organic oils, esters or other additives serving for plasticization, stabilizers, antioxidants, acid scavengers and/or ageing inhibitors.

40. Process according to one of Claims 1 to 39, **characterized in that** the granules are prepared in step (b) by underwater granulation and/or with the aid of a discharge belt which in particular is cooled and preferably is moving.

41. Process according to Claim 40, **characterized in that** in the case of the underwater granulation carried out in step (b) the melt is provided in extrudable form close to the softening point as measured by the ring-and-ball method and the melt is extruded through at least one opening in a die plate into a cooling liquid, in particular water, the melt being chopped up as it emerges from the die plate, in particular by means of rotating blades.

42. Process according to Claim 40, **characterized in that** the granules are prepared by means of a discharge belt in the absence of moisture.

43. Reactive one-component granules, especially one-component coating-material and/or adhesive granules, obtainable by the process according to Claims 1 to 23 and 39 to 42.

44. Reactive one-component granules, especially one-component coating-material and/or adhesive granules, comprising
(i) 2 % to 30 % by weight of at least one diisocyanate and/or polyisocyanate,
(ii) 30 % to 70 % by weight of at least one isocyanate-reactive starting polymer,
(iii) 5 % to 30 % by weight of a non-isocyanate-reactive wax, resin and/or polymer, selected from the group of ethylene/vinyl acetate polymers and copolymers, polyolefins, (meth)acrylates and styrene-(meth)acrylates and also mixtures of these compounds,
(iv) optionally, at least one catalyst,
the granules having an excess of diisocyanate and/or polyisocyanate, with the proviso that the amount of free NCO groups is 0.5 % to 30 % by weight, based on the granules.

45. Reactive one-component granules, especially one-component coating-material and/or adhesive granules, according to Claim 44, **characterized in that** the amount of free, preferably terminal NCO groups is 0.5 % by weight to 10 % by weight, preferably 0.5 % by weight to 5 % by weight, more preferably 0.5 % by weight to 3 % by weight, based on the granules.

46. Reactive one-component granules, especially one-component coating-material and/or adhesive granules, according to Claim 44 or 45, **characterized by** the features of the characterizing clause of one or more of Claims 7 to 23 and 39.

47. Reactive one-component granules, especially one-component coating-material and/or adhesive granules based on polyolefin, obtainable by the process according to Claims 24 to 42.

48. Reactive one-component granules, especially one-component coating-material and/or adhesive granules, comprising at least one silane-functional polyolefin, at least one non-silane-functional polyolefin and at least one catalyst and, optionally, at least one wax and/or resin and, optionally, at least one additive.

49. Reactive one-component granules, especially one-component coating-material and/or adhesive granules, according to Claim 48, **characterized by** the features of the characterizing clause of one or more of Claims 28 to 39.

50. Use of reactive one-component granules, especially one-component coating-material and/or adhesive granules, according to Claims 43 to 49 for the adhesive bonding in particular of foam cushions, upholstered furniture and mattresses or for continuous coating purposes such as profile wrapping, the application taking place in particular by spray, squirt, nozzle or roller application.

## Revendications

1. Procédé pour la préparation d'un granulat réactif à un composant, en particulier d'un granulat d'enduction et/ou d'encollage à un composant, **caractérisé par** les étapes de procédé suivantes :
a) Préparation d'un mélange comprenant :
(i) 2 à 30 % en poids d'au moins un diisocyanate et/ou polyisocyanate,
(ii) 30 à 70 % en poids d'au moins un polymère de départ réagissant aux isocyanates,
(iii)5 à 30 % en poids d'une cire, d'une résine et/ou d'un polymère ne réagissant pas aux isocyanates, sélectionné dans le groupe de polymères et de copolymères éthylène-acétate de vinyl, de polyoléfines, de (méth-)acrylates et de méthacrylates de styrène, ainsi que des mélanges de ces composés ;
(iv) le cas échéant, au moins un catalyseur,
avec fusion des constituants du mélange et/ou chauffage jusqu'à un état visqueux ou à écoulement libre,
la préparation du mélange s'effectuant de manière telle qu'un excès de diisocyanate et/ou de polyisocyanate dans le mélange obtenu a lieu en ce sens que la teneur en groupes NCO libres dans le mélange obtenu se situe entre 0,5 et 30 % en poids;
(b) Préparation d'un granulat à partir du mélange résultant de (a), en particulier une masse fondue.

2. Procédé selon la revendication 1, **caractérisé en ce que**, lors de la préparation du mélange au cours de l'étape (a), le polymère de départ réactif aux isocyanates est d'abord fondu, le diisocyanate et/ou le polyisocyanate étant intégré dans la masse fondue ainsi obtenue.

3. Procédé selon la revendication 1 ou 2, **caractérisé en ce que** la préparation du mélange au cours de l'étape (a) a lieu en présence d'au moins un additif.

4. Procédé selon l'une des revendications 1 à 3, **caractérisé en ce que** après l'étape (b) un poudrage ou revêtement du granulat préparé au cours de l'étape (b) a lieu à l'aide des méthodes habituelles.

5. Procédé selon l'une des revendications 1 à 4, **caractérisé en ce que** la préparation du mélange au cours de l'étape (a) est exécutée sous exclusion de l'humidité.

6. Procédé selon l'une des revendications 1 à 5, **caractérisé en ce que** le polymère de départ réactif aux isocyanates est séché par évacuation avant et/ou pendant la préparation du mélange au cours de l'étape (a).

7. Procédé selon l'une des revendications 1 à 6, **caractérisé en ce que** la préparation du mélange de diisocyanate et/ou de polyisocyanate et de polymères de départ réagissant aux isocyanates, exécutée au cours de l'étape (a) a lieu de manière telle qu'un excès de diisocyanate et/ou de polyisocyanate est présent dans le mélange obtenu sous (a) en ce sens que la teneur en groupes NCO libres, préférentiellement terminaux, dans le mélange obtenu dans l'étape (a) est de 0,5 % à 10 % en poids, préférentiellement 0,5 % à 5 % en poids, de manière particulièrement préférentielle 0,5 % à 3 % en poids.

8. Procédé selon l'une des revendications 1 à 7, **caractérisé en ce que**, pour la préparation du mélange au cours de l'étape (a), la quantité de diisocyanate et/ou de polyisocyanate est de 5 % à 20 % en poids, préférentiellement 8 % à 15 % en poids et/ou pour la préparation du mélange au cours de l'étape (a), la quantité de polymère de départ réagissant aux isocyanates est de 40 % à 60 % en poids, préférentiellement 45 % à 55 % en poids et/ou pour la préparation du mélange au cours de l'étape (a), la quantité de cire, de résine et/ou de polymère ne réagissant pas aux isocyanates est de 10 % à 25 % en poids, préférentiellement 15 % à 20 % en poids.

9. Procédé selon l'une des revendications 1 à 8, **caractérisé en ce que** la masse moléculaire moyenne du polymère de départ réagissant aux isocyanates est supérieure à 8.000 g/mol., en particulier à 10.000-50.000 g/mol., préférentiellement à 10.000-30.000 g/mol.

10. Procédé selon l'une des revendications 1 à 9, **caractérisé en ce que** le polymère de départ réagissant aux isocyanates présente au moins deux groupes réagissant aux isocyanates par molécule, en particulier les groupes hydroxyle, amino, carboxyle, anhydride de l'acide carboxylique, mercapto et/ou éventuellement des groupes silyle et/ou que le polymère de départ réagissant aux isocyanate présente au moins deux atomes d'hydrogène réagissant aux isocyanates et/ou aux polyisocyanates par molécule.

11. Procédé selon l'une des revendications 1 à 10, **caractérisé en ce que** le polymère de départ réagissant aux isocyanates est sélectionné à partir du groupe de polyesters, polyesters polycaprolactone, polyéthers, polyuréthanes, polyamides, polytétrahydrofuranes, polyacrylates et polyméthacrylates réagissant aux isocyanates, dans chaque cas en particulier avec des atomes d'hydrogène réagissant aux isocyanates, préférentiellement des groupe hydroxyle.

12. Procédé selon l'une des revendications 1 à 11, **caractérisé en ce que** le polymère de départ réagissant aux isocyanates présente un indice hydroxyle d'au moins 15 mg de KOH/g, en particulier d'au moins 20 mg de KOH/g, préférentiellement d'au moins 25 mg de KOH/g, de manière particulièrement préférentielle d'au moins 30 mg de KOH/g.

13. Procédé selon l'une des revendications 1 à 12, **caractérisé en ce que** le polymère de départ réagissant aux isocyanates est dérivé de copolymères réagissants aux isocyanates.

14. Procédé selon l'une des revendications 1 à 13, **caractérisé en ce que** le diisocyanate et/ou le polyisocyanate est un diisocyanate et/ou un polyisocyanate aliphatique et/ou aromatique, en particulier avec des groupes NCO libres, préférentiellement terminaux.

15. Procédé selon l'une des revendications 1 à 14, **caractérisé en ce que** le diisocyanate et/ou le polyisocyanate est sélectionné à partir du groupe de diisocyanatodiphénylméthanes (MDI), en particulier 4,4'-diisocyanatodiphénylméthane et 2,4'-diisocyanatodiphénylméthane, de même que de mélanges de différents diisocyanatodiphénylméthanes; 1,5-diisocyanatonaphtaline (NDI); diisocyanatotoluène (TDIs), en particulier 2,4-diisocyanatotoluène, de même que des uréthodiones TDI, en particulier 1-méthyl-2,4 phenylènediisocyanate dimère (TDI-U) et les urées TDI; 1-isocyanato-3-isocyanatométhyle-3,5,5-triméthylcyclohexane (IPDI) et ses isomères et dérivés, en particulier des dimérisats, trimérisats et polymérisats, de même que l'isocyanurate IPDI (IPDI-T); 3,3'-diméthylbiphényle-4,4'-diisocyanate (TODI); 3,3'-diisocyanato-4,4'-diméthyle-N,N'-diphénylurée (TDIH); ainsi que des mélanges et des prépolymères des composés susdits.

16. Procédé selon l'une des revendications 1 à 15, **caractérisé en ce que** le diisocyanate et/ou le polyisocyanate est substitué de manière non symétrique et présente, en particulier, deux groupes NCO à la réactivité différente.

17. Procédé selon l'une des revendications 1 à 16, **caractérisé en ce que** le diisocyanate est un mélange de 4,4'-diisocyanatodiphénylméthane et de 2,4'-diisocyanatodiphénylméthane, préférentiellement avec une teneur en 2,4'-diisocyanatodiphénylméthane supérieure à 20 % en poids, en particulier supérieure à 30 % en poids, préférentiellement supérieure à 40 % en poids et de manière tout particulièrement préférentielle supérieure à 50 % en poids, par rapport au mélange d'isocyanate.

18. Procédé selon l'une des revendications 1 à 17, **caractérisé en ce que** le diisocyanate est 2,4'-diisocyanatodiphénylméthane.

19. Procédé selon l'une des revendications 1 à 18, **caractérisé en ce que** le diisocyanate et/ou le polyisocyanate est un diisocyanate et/ou un polyisocyanate masqué ou bloqué, lequel dissocie les groupes bloquants ou masquants, en particulier sous l'action de la chaleur et/ou de l'humidité.

20. Procédé selon l'une des revendications 1 à 18, **caractérisé en ce que** le diisocyanate et/ou le polyisocyanate est un diisocyanate et/ou un polyisocyanate encapsulé ou à activation de la surface, en particulier dont l'encapsulage ou l'activation de la surface est déclenché(e) préférentiellement à des températures supérieures à la température ambiante.

21. Procédé selon l'une des revendications 1 à 20, **caractérisé en ce que** le catalyseur et/ou la cire, la résine et/ou le polymère ne réagissant pas aux isocyanates est distribué préférentiellement de manière homogène sur la phase du polymère de sortie réagissant aux isocyanates.

22. Procédé selon l'une des revendications 1 à 21, **caractérisé en ce que** le catalyseur est en particulier un catalyseur courant et connu dans la chimie des polyuréthanes et est préférentiellement sélectionné à partir du groupe des composés stanniques organiques comme le dilaurate de dibutylétain (DBTL), des composés alkylmercaptures du dibutylétain, des composés organiques de fer, de plomb, de cobalt, de bismuth, d'antimoine, de zinc, des catalyseurs à base d'amine comme des amines tertiaires, 1,4-diazabicyclo(2.2.2)octane, l'éther dimorpholinodiéthylique et des mélanges des composés susdits.

23. Procédé selon l'une des revendications 1 à 22, **caractérisé en ce que** le polymère ne réagissant pas aux isocyanates est sélectionné à partir du groupe de (i) polymères ou copolymères éthylène/acétate de vinyle avec des teneurs en acétate de vinyle comprises entre 12 et 40 % en poids, en particulier 18 à 28 % en poids et/ou avec un indice de fusion (MFI, DIN 53735) de 8 à 800, en particulier de 150 à 500; (ii) des polyoléfines avec des poids moléculaires moyens compris entre 5.000 et 25.000 g/mol., préférentiellement 10.000 à 20.000 g/mol., et/ou avec des domaines de ramollissement après anneau et bille compris entre 80 et 170 °C, préférentiellement entre 80 et 130 °C et (iii) des (méth)acrylates comme des (méth)acrylates de styrène; ainsi que des mélanges de ces composés.

24. Procédé pour la préparation d'un granulat réactif à un composant, en particulier d'un granulat d'enduction et/ou d'encollage à un composant, **caractérisé par** les étapes de procédé suivantes :
(a) Préparation du mélange qui comprend au moins une polyoléfine silane-fonctionnelle, au moins une polyoléfine non silane-fonctionnelle et au moins un catalyseur, préférentiellement sous fusion des éléments du mélange et/ou chauffage jusqu'à un état visqueux ou à écoulement libre;
(b) Préparation d'un granulat à partir du mélange résultant de (a), en particulier d'une masse fondue.

25. Procédé selon la revendication 24, **caractérisé en ce que** la préparation du mélange au cours de l'étape (b) a lieu par fusion simultanée de tous les composants.

26. Procédé selon la revendication 24 ou 25, **caractérisé en ce que** la préparation du mélange est exécutée au cours de l'étape (a) sous exclusion d'humidité et/ou en présence d'au moins une cire et/ou d'au moins une résine et/ou d'au moins un additif.

27. Procédé selon l'une des revendications 24 à 26, **caractérisé en ce que** après l'étape (b), un poudrage ou un revêtement du granulat préparé dans l'étape (b) a lieu avec les méthodes habituelles.

28. Procédé selon l'une des revendications 24 à 27, **caractérisé en ce que** pour la préparation du mélange au cours de l'étape (a), la quantité de polyoléfine silane-fonctionnelle est de 40 % à 80 % en poids, en particulier de 50 % à 70 % en poids, préférentiellement de 60 % à 70 % en poids et/ou que pour la préparation du mélange au cours de l'étape (a), la quantité de polyoléfine non silane-fonctionnelle est de 5 % à 20 % en poids, en particulier de 8 % à 17 % en poids, préférentiellement de 10 % à 15 % en poids et/ou que pour la préparation du mélange au cours de l'étape (a), la quantité de résine est de 5 % à 30 % en poids, en particulier de 10 % à 25 % en poids, préférentiellement de 15 % à 20 % en poids et/ou que pour la préparation du mélange au cours de l'étape (a), la quantité de cire est de 0,5 % à 3 % en poids, en particulier de 1 % à 2,5 % en poids, préférentiellement de 1,5 % à 2 % en poids et/ou que pour la préparation du mélange au cours de l'étape (a), la quantité de catalyseur est 0,02 % en poids à 0,3 % en poids, en particulier de 0,04 % à 0,2 % en poids, préférentiellement de 0,5 % à 1,0 % en poids.

29. Procédé selon l'une des revendications 24 à 28, **caractérisé en ce que** la polyoléfine silane-fonctionnelle est une poly-α-oléfine silane-fonctionnelle, en particulier amorphe.

30. Procédé selon l'une des revendications 24 à 29, **caractérisé en ce que** la polyoléfine silane-fonctionnelle est une polyoléfine silan-terminée.

31. Procédé selon l'une des revendications 24 à 30, **caractérisé en ce que** la polyoléfine silane-fonctionnelle peut être obtenue par greffage d'une polyoléfine avec des fonctions silane.

32. Procédé selon l'une des revendications 24 à 31, **caractérisé en ce que** la polyoléfine silane-fonctionnelle est une polyoléfine modifiée avec des groupes trialcoxysilyle, en particulier des groupes triméthoxysilyle ou triéthoxysilyle.

33. Procédé selon l'une des revendications 24 à 32, **caractérisé en ce que** la polyoléfine silane-fonctionnelle présente un poids moléculaire moyen de 10.000 g/mol. à 60.000 g/mol., en particulier 20.000 g/mol. à 50.000 g/mol., préférentiellement 30.000 g/mol. à 40.000 g/mol. et/ou que la polyoléfine silane-fonctionnelle présente une viscosité de fusion de 1.000 mPas à 15.000 mPas, en particulier de 2.000 mPas à 10.000 mPas, préférentiellement de 3.000 mPas à 7.000 mPas et/ou que la polyoléfine silane-fonctionnelle présente une température de transition vitreuse après sa préparation de -20 °C à -40 °C, en particulier de -23 °C à -35 °C, préférentiellement de -25 °C à -30 °C et/ou que la polyoléfine silane-fonctionnelle présente une densité à 23 °C, égale à 0,65 g/cm³ à 1,30 g/cm³, en particulier de 0,70 g/cm³ à 1,20 g/cm³, préférentiellement de 0,75 g/cm³ à 1,10 g/cm³, de manière particulièrement préférentielle de 0,80 g/cm³ à 1,00 g/cm³.

34. Procédé selon l'une des revendications 24 à 33, **caractérisé en ce que** la polyoléfine non silane-fonctionnelle est une poly-α-oléfine en particulier amorphe.

35. Procédé selon l'une des revendications 26 à 34, **caractérisé en ce** le catalyseur et/ou la cire et/ou la résine sont distribués de manière homogène sur la (les) phase(s) polyoléfine.

36. Procédé selon l'une des revendications 24 à 35, **caractérisé en ce** le catalyseur est un catalyseur courant et bien connu en chimie des polyoléfines, lequel a été en particulier sélectionné à partir du groupe de composés organométalliques des métaux de transition, préférentiellement des composés organiques du zinc, du fer, du plomb, du cobalt, du bismuth, de l'antimoine et de l'étain comme le laurate de dibutylétain.

37. Procédé selon l'une des revendications 26 à 36, **caractérisé en ce que** la résine est sélectionnée préférentiellement à partir du groupe des résines d'hydrocarbures aliphatiques, cycliques ou cycloaliphatiques, des résines terpènephénoliques, des résines cumarone-indéniques, des résines α-méthylstyrène, des esters de résine tallique polymérisée et/ou des résines cétone-aldéhyde.

38. Procédé selon l'une des revendications 26 à 37, **caractérisé en ce que** la cire est en particulier une cire de polyoléfine, préférentiellement une cire de polyéthylène et de polypropylène ou une cire modifiée sur cette base.

39. Procédé selon l'une des revendications 3 à 23 et 26 à 38, **caractérisé en ce que** les additifs pour les matières d'enduction et d'encollage réactives sont des additifs en soi connus, comme en particulier des plastifiants à base d'esters de l'acide phtalique et/ou de l'acide phosphorique, d'acétate de glycole, d'huiles organiques à haut point d'ébullition, d'esters ou d'autres additifs, stabilisateurs, antioxydants, capteurs d'acide et/ou produits de protection contre le vieillissement servant à la plastification.

40. Procédé selon l'une des revendications 1 à 39, **caractérisé en ce que** au cours de l'étape (b), la production du granulat a lieu par granulation sous eau et/ou à l'aide d'une bande d'application en particulier refroidie, préférentiellement mobilisée.

41. Procédé selon la revendication 40, **caractérisé en ce que**, pour la granulation sous eau exécutée au cours de l'étape (b), la masse fondue est préparée sous une forme extrudable à proximité du point de ramollissement mesuré selon la méthode à anneau et à bille et que la masse fondue est extrudée par au moins une ouverture d'une plaque de forme dans un liquide refroidisseur, en particulier de l'eau, la masse fondue étant réduite à sa sortie de la plaque de forme, en particulier par des lames en rotation.

42. Procédé selon la revendication 40, **caractérisé en ce que** la préparation du granulat a lieu au moyen d'une bande d'application sous exclusion de l'humidité.

43. Granulat réactif à un composant, en particulier granulat d'enduction et/ou d'encollage à un composant, qui peut être obtenu selon le procédé conformément aux revendications 1 à 23 et 39 à 42.

44. Granulat réactif à un composant, en particulier granulat d'enduction et/ou d'encollage à un composant comprenant
(i) 2 à 30 % en poids d'au moins un diisocyanate et/ou polyisocyanate,
(ii) 30 à 70 % en poids d'au moins un polymère de départ réagissant aux isocyanates,
(iii) 5 à 30 % en poids d'une cire, d'une résine et/ou d'un polymère ne réagissant pas aux isocyanates, sélectionné dans le groupe de polymères et de copolymères éthylène-acétate de vinyle, de polyoléfines, de (méth-)acrylates et de (méth)-acrylates de styrène ainsi que des mélanges de ces composés;
(iv) le cas échéant, au moins un catalyseur,
le granulat présentant un excès de diisocyanate et/ou de polyisocyanate en ce sens que la teneur en groupes NCO libres est de 0,5 % à 30 % en poids par rapport au granulat.

45. Granulat réactif à un composant, en particulier granulat d'enduction et/ou d'encollage à un composant selon la revendication 44, **caractérisé en ce que** la teneur en groupes NCO libres, préférentiellement terminaux est de 0,5 % à 10 % en poids, préférentiellement de 0,5 % à 5 % en poids, de manière particulièrement préférentielle de 0,5 % à 3 % en poids par rapport au granulat.

46. Granulat réactif à un composant, en particulier granulat d'enduction et/ou d'encollage à un composant selon la revendication 44 ou 45, **caractérisé en ce que** les caractéristiques de la partie caractéristique sont une ou plusieurs des revendications 7 à 23 et 39.

47. Granulat réactif à un composant, en particulier granulat d'enduction et/ou d'encollage à un composant à base de polyoléfine, qui peut être obtenu dans le procédé des revendications 24 à 42.

48. Granulat réactif à un composant, en particulier granulat d'enduction et/ou d'encollage à un composant, contenant au moins une polyoléfine silane-fonctionnelle, au moins une polyoléfine non silane-fonctionnelle et au moins un catalyseur et, le cas échéant, au moins une cire et/ou une résine et, le cas échéant, au moins un additif.

49. Granulat réactif à un composant, en particulier granulat d'enduction et/ou d'encollage à un composant selon la revendication 48, **caractérisé par** les propriétés de la partie caractéristique d'une ou plusieurs des revendications 28 à 39.

50. Utilisation d'un granulat réactif à un composant, en particulier d'un granulat d'enduction et/ou d'encollage à un composant, selon les revendications 43 à 49, pour le collage en particulier de rembourrages en mousse, de meubles garnis et de matelas ou à des fins d'enduction continue comme des gainages de profilés, l'application ayant lieu en particulier par pulvérisation, pistolage, projection à l'aide de buses ou l'utilisation de rouleaux.
